(19) Europäisches Patentamt
European Patent Office
Office européen des brevets

(11) Veröffentlichungsnummer: **0 184 149 B1**

# (12) EUROPÄISCHE PATENTSCHRIFT

(45) Veröffentlichungstag der Patentschrift: **27.12.91**

(51) Int. Cl.$^5$: **C08G 65/44**, C08G 65/48

(21) Anmeldenummer: **85115150.6**

(22) Anmeldetag: **29.11.85**

## (54) Poly(phenylenether) und Verfahren zu ihrer Herstellung.

(30) Priorität: **04.12.84 DE 3444099**

(43) Veröffentlichungstag der Anmeldung:
**11.06.86 Patentblatt 86/24**

(45) Bekanntmachung des Hinweises auf die Patenterteilung:
**27.12.91 Patentblatt 91/52**

(84) Benannte Vertragsstaaten:
**AT BE DE FR GB NL**

(56) Entgegenhaltungen:
**EP-A- 0 137 546**
**DE-A- 1 962 767**
**DE-A- 2 505 329**
**US-A- 3 257 357**
**US-A- 3 306 874**

**CHEMICAL ABSTRACTS, Band 82, Nr. 8, 24. Februar 1975, Seite 52, Spalte 2, Zusammenfassungsnr. 443902, Columbus, Ohio, US; & CS - A - 152 050 (Z. SLAMA et al.) 15.01.1974**

**CHEMICAL ABSTRACTS, Band 80, Nr. 22, 3. Juni 1975, Seite 43, Spalte 1, Zusammenfassungsnr. 121882z, Columbus, Ohio, US; & JP - A - 73 30158 (ASAHI CHEMICAL INDUSTRY CO. LTD.) 18.09.1973**

(73) Patentinhaber: **BASF Aktiengesellschaft**
**Carl-Bosch-Strasse 38**
**W-6700 Ludwigshafen(DE)**

(72) Erfinder: **Mitulla, Konrad, Dr.**
**Schwalbenweg 31**
**W-6700 Ludwigshafen(DE)**
Erfinder: **Hambrecht, Juergen, dr.**
**Werderstrasse 30**
**W-6900 Heidelberg(DE)**
Erfinder: **Tesch, Helmut, Dr.**
**Goethestrasse 12**
**W-6701 Birkenheide(DE)**
Erfinder: **Schmitt, Burghard, Dr.**
**Braeunigstrasse 12**
**W-6520 Worms 24(DE)**
Erfinder: **Maeder, Hans Joachim, Dr.**
**Am Hipperling 5**
**W-6719 Battenberg(DE)**

**EP 0 184 149 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung hochmolekularer Poly(phenylenether) aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 10 und 50 °C in Anwesenheit eines Katalysatorkomplexes aus einem Kupfersalz und einem organischen Amin in Gegenwart eines Lösungsmittels im Bereich von 1:1 bis 20:1 Gewichtsteilen, bezogen auf das monomere Phenol, und gegebenenfalls eines Aktivators und anschließendes Abstoppen der Reaktion und Entfernen der Katalysatorkomponente durch Zugabe ausreichender Mengen chelat- und/oder salzbildender Mittel, und Stabilisierung des Poly(phenylenethers) durch chemische Umsetzungen an den Hydroxylgruppen.

Poly(phenylenether) kurz auch Polyphenylenether genannt, und Verfahren zu ihrer Herstellung sind allgemein bekannt und vielfach beschrieben, wie beispielsweise in den US-Patentschriften 3 306 874, 3 306 875, 3 642 699 und 3 661 848, deren Offenbarungsgehalt in die vorliegende Anmeldung aufgenommen wird.

Die zur Herstellung der Polyphenylenether am häufigsten angewendeten Verfahren umfassen die Selbstkondensation einwertiger Phenole durch Einwirkung von Sauerstoff in Gegenwart von Katalysatoren. Als Katalysatoren werden bevorzugt Metall-Amin-Komplexe, insbesondere Kupfer-Amin-Komplexe eingesetzt. Als Lösungsmittel werden vorzugsweise aromatische Kohlenwasserstoffe verwendet. Die Reaktion wird gewöhnlich durch Entfernen des Katalysators aus der Reaktionsmischung beendet. Dies geschieht durch die Verwendung von wäßrigen Lösungen von anorganischen oder organischen Säuren, wie es z.B. in der DE-A-11 05 372 im Gegenstromextraktionsverfahren vorgenommen wird. Verwendet werden auch Polyaminocarbonsäuren [vgl. DE-A-23 64 319) oder andere Chelatisierungsmittel wie Nitrilotriessigsäure und ihre Natriumsalze oder Ethylendiamintetraessigsäure und ihre Natriumsalze (vgl. DE-A-25 32 477), letztere auch in Kombination mit quartären Ammoniumsalzen (vgl. US-A-4 026 870). Beschrieben wird auch die Katalysatorabtrennung mit Hilfe komplexbildender Mittel aus der Gruppe des Bisguanids (vgl. DE-A-24 60 325). Neben dem Abbrechen der oxidativen Selbstkondensation hat die Zugabe des komplexbildenden Agens auch die möglichst vollständige Entfernung des Katalysators aus dem Polyphenylenether zum Ziel, da Verunreinigungen des Polymeren durch Metallreste zu einer Verschlechterung des gesamten Eigenschaftsbildes des Polymeren führen.

In der Regel muß neben der Entfernung des Katalysatorsystems eine zusätzliche Maßnahme ergriffen werden, um die Polyphenylenether gegen Molekulargewichtsabbau zu stabilisieren. In den DE-A-26 16 756 und 27 54 887 ist hierzu vorgeschlagen worden, die polyphenylenetherhaltigen Lösungen mit Reduktionsmitteln und zweiwertigen Phenolen zu behandeln. Auf diese Weise wird auch das als Nebenprodukt gebildete Diphenochinon in das farblose Bisphenol überführt. Es hat sich aber gezeigt, daß diese Maßnahme nicht ausreicht, Polyphenyletherformmassen gegen thermischen und/oder oxidativen Abbau zu stabilisieren. Für den thermischen und thermooxidativen Abbau werden die Hydroxylendgruppen in den Polyphenylenethern als Schwachstellen und Angriffspunkte angenommen. Deshalb ist in der Patentliteratur häufig vorgeschlagen worden, diese Hydroxylgruppen durch chemische Umsetzung zu maskieren (vgl. US-Patentschriften 3 402 143 (1), 3 753 946 (2), 4 048 143 (3), 3 392 146 (4), 3 375 228 (5) und CA <u>82</u>, S. 52, 44390z (1975) sowie CA <u>80</u>, S. 43, 121882z (1975).

In den Literaturstellen (1) bis (3) wird die Verkappung der Hydroxylgruppen mit Säurehalogeniden, Säureanhydriden, Sulfonsäurechloriden und Dialkylsulfaten unter Zugabe verschiedener Basen bzw. unter Überführung der Polyphenylenethermoleküle in die entsprechenden Phenolate beschrieben. Es hat sich jedoch gezeigt, daß diese Umsetzung nur eine unvollständige Verkappung der OH-Gruppen erbringt, so daß im IR-Spektrum der Polyphenylenether noch freie OH-Gruppen festgestellt werden können. In der Druckschrift (4) wird die Verkappung mit Ketenen beschrieben, die ebenfalls unbefriedigende Umsetzung erbringt. In der Patentschrift (5) wird deshalb eine Hochtemperaturverkappung von Polyphenylenethern mit Säureanhydriden und Ketenen vorgeschlagen, bei der auch die Seitenkettenhydroxylgruppen verkappt werden. Diese Verkappungsmethode hat jedoch den wesentlichen Nachteil, daß sie zu stark verfärbten Polyphenylenethern führt.

Aus der Literaturstelle DE-A-32 38 930 ist es auch bereits bekannt, die erhaltenen Polyphenylenether mit β-Lactonen oder polymeren Propiolactonen umzusetzen, wobei eine Verkappung des Polyphenylenethers erreicht wird. Dieses bekannte Verfahren weist aber den Nachteil auf, daß die β-Lactone nicht in genügend großer Menge herzustellen und sehr kostspielig sind.

Weiterhin ist aus der EP-A 137546 bekannt, daß kautschukmodifizierten Polyphenylenethern zur Verbesserung der Haftung von Lacken, Klebern oder Harzen Epoxidverbindungen zugesetzt werden können.

Der Erfindung lag daher die Aufgabe zugrunde, vollständig verkappte hochmolekulare Polyphenylenether und ein Verfahren zu ihrer Herstellung zu entwickeln, die eine helle Eigenfarbe und eine hohe Stabilität gegen thermische und thermooxidative Angriffe und die oben aufgezeigten Nachteile nicht aufweisen.

Die Aufgabe wird erfindungsgemäß durch die in den Ansprüchen 1 bis 8 beschriebenen Verfahrensweisen gelöst.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die erfindungsgemaßen Polymeren weisen Molekulargewichte von 10.000 bis 90. 000, bevorzugt 20.000 bis 80.000, bestimmt nach der in "Macromolecular Synthesis" 1 (1978), Seite 83 angegebenen Methode, auf. Hochmolekulare Polyphenylenether, auch Poly(phenylenoxide) genannt, sind an sich aus der Literatur seit längerem bekannt (vgl. z.B. US-A-3 661 848, US-A-3 219 625 oder US-A-3 378 505), so daß sich hier eine weitere Beschreibung erübrigt.

Die zur Herstellung der hochmolekularen Polyphenylenether verwendeten einwertigen Phenole, die in den beiden ortho-Stellungen und gegebenenfalls der meta-Position, nicht aber in der para-Stellung Alkylsubstituenten aufweisen, sind die üblichen Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 10 bis 50° C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 874 und 3 306 875 beschrieben ist. Nach diesem bevorzugten Verfahren wird der Katalysator aus Kupfersalz, vorzugsweise Kupfer-I-bromid, Amin und 0,01 bis 5 Gew.% 2,6-Dimethylphenol in die Vorlage der gelösten Monomeren eindosiert.

Bei dem für die Polykondensation bekannten Katalysatorkomplex handelt es sich üblicherweise um eine Kombination aus einem Amin, z.B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit einem Kupfersalz wie Kupfer-I-Bromid, Kupfer-I-Chlorid, Kupfer-I-Iodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2.0 bis 25,0 Mol pro 100 Mol des Monomeren, die Konzentration der Amine kann aber in der Reaktionsmischung innerhalb weiter Grenzen variieren, zweckmäßig sind jedoch niedere Konzentrationen. Die Konzentration der Kupfersalze wird gering gehalten und variiert vorzugsweise von 0,2 bis 2,5 Mol pro 100 Mol des Monomeren.

Der Anteil des Lösungsmittels liegt üblicherweise im Bereich von 1:1 bis 20:1 d.h., maximal bis zu einem Überschuß des 20-fachen an Lösungsmittel, bezogen auf das Monomere. Als Lösungsmittel werden Benzol, Toluol und aliphatische Kohlenwasserstoffe, vorzugsweise $C_6$- bis $C_{10}$-Kohlenwasserstoffe, verwendet. Darüber hinaus kann die Reaktionsmischung einen Aktivator wie ein Diarylguanidin oder ein Diarylformamidin enthalten (vgl. US-A-3 544 515).

Beim üblichen Verfahren wird die Polykondensationsreaktion bei Temperaturen zwischen 10 und 50, vorzugsweise 18 bis 30° C durchgeführt. Hierzu wird der Sauerstoff in die 10 bis 50° C warme Lösung des Monomeren in Gegenwart des Aminkomplexes eingeleitet. Die Reaktion ist in kurzer Zeit beendet, d.h. das Katalysatorgemisch wird in 0,1 bis 1,5 Stunden in die Monomerlösung unter Sauerstoff- oder Luftbegasung eindosiert.

Wenn die Polykondensation die gewünschte Ausbeute und das Polymere das gewünschte Molekulargewicht erreicht hat, enthält die Reaktionslösung 1 bis 30 Gew.% Polyphenylenether. 0,005 bis 1,5 Gew.% Metallionen und etwa 0,1 bis 6,0 Gew.% Amin sowie gegebenenfalls geringe Mengen anderer Materialien. Diese Reaktionslösungen werden mit dem komplex- und/oder salzbildenden Mittel zur Abtrennung des im Polymeren enthaltenen Metallkatalysators behandelt. Die Art und Weise der Zugabe der metallbildenden Extraktionsmittel ist dabei unkritisch. So können diese Extraktionsmittel in Substanz ebenso wie in wäßriger Lösung und in Form ihrer Alkali- oder Erdalkalisalze hinzugegeben werden. Die Zugabe kann auf einmal oder in mehreren Anteilen, kontinuierlich oder diskontinuierlich, mit und ohne zusätzliches Wasser erfolgen. Die Separierung der Metallkomponente kann dabei in geeigneten Verfahrensvorrichtungen wie z.B. in Dekantationstanks, Zentrifugen und ähnlichem vorgenommen werden.

Die Kontaktzeit des komplex- und salzbildenden Agens mit der katalysatorhaltigen Polyphenylenether-Phase kann innerhalb weiter Grenzen variieren. Bevorzugt werden Reaktionszeiten von einer Minute bis 5 Stunden. Häufig genügen Reaktionszeiten von 5 bis 60 Minuten. Die bevorzugte Reaktionstemperatur liegt zwichen 25 und 90° C, es sind jedoch auch Temperaturbereiche darunter und darüber anwendbar.

Bevorzugt eingesetzt werden als komplex- und salzbildendes Agens Verbindungen, die aus der Gruppe der Polyalkylpolyamine, Polycarbonsäuren, polymere Polycarbonsäuren, Aminopolycarbonsäuren, Aminocarbonsäuren, Aminophosphonsäuren ausgewählt sind. Besonders bevorzugt sind Aminopolycarbonsäuren und ihre Alkali- und/oder Erdalkalisalze wie Ethylendiamintetraessigsaure. Nitrilotriessigsäure und ihre Mono-, Di- und Trinatriumsalze, Zitronensaure, Glycin, Diglykolsäure, Polyacrylsäure, Polymaleinsäure, Aminotri(methylenphosphonsäure), Hyroxyethandiphosphonsaure, Hydroxyethyliminodiessigsäure und andere.

Die komplex- und salzbildenden Mittel werden in solchen Mengen eingesetzt, daß mindestens ein Mol Carbonsäure- und/oder Phosphonsauregruppe auf 1 Mol des zu entferndenden Metallions entfallt. Im allgemeinen werden je Äquivalent Schwermetallion 1,2 bis 100 Äquivalente Carbonsäuregruppen oder Phosphonsäuren eingesetzt.

Die Abtrennung der Metallkatalysatoren bis zur vollständigen Entfernung aus dem Polyphenylenether-Polymeren kann durch mehrfache Zugabe der Extraktionsmittel und anschließende Separierung der resultierenden Metallkomplexe und Metallsalze gemäß der bereits beschriebenen Verfahren erfolgen. Bevorzugt wird jedoch eine Ausführungsform der Erfindung, wonach die gesamte Katalysatormenge in einem Schritt aus dem Polymeren entfernt wird.

Die Aminkomponente des Katalysatorsystems kann entweder durch Salzbildung mit verdünnten Säuren extrahiert oder aber durch Destillation entfernt werden. Als Säuren eignen sich insbesondere verdünnte schwefelige Säure, Schwefelsäure und/oder Essigsäure. Diese Extraktion kann vor oder nach der Stabilisierung der Polyphenylenetherlösungen mit Reduktionsmitteln erfolgen.

Zur Stabilisierung der Polyphenylenetherlösungen gegen Molekulargewichtsabbau können Reduktionsmittel gegebenenfalls in Kombination mit mehrwertigen Phenolen eingesetzt werden. Besonders günstig ist die Reduktion der Polyphenylenetherlösungen mit Schwefeldioxid, Sulfiten, Dithioniten, Hydrazin, Hydroxylaminen und Ascorbinsäure. In der Regel werden hierzu wäßrige Lösungen dieser Reduktionsmittel eingesetzt. Die Reduktionsmittel werden dabei in Mengen zugesetzt, daß auf ein Mol Kupfersalz des Katalysators 0,1 bis 0,5 Mol Reduktionsmittel kommen. Die Stabilisierung wird bei Temperaturen von 25 bis 120 °C bei Verweilzeiten von einer Minute bis 2 Stunden und unter inniger Durchmischung vorgenommen.

Nach der Entfernung der wäßrigen Reduktionsmittel-Lösungen werden die in der Polyphenylenetherkette enthaltenen Hydroxylgruppen nach dem erfindungsgemäßen Verfahren durch Zugabe von Epoxiden (Oxiranen) der allgemeinen Struktur (I)

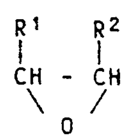

I

umgesetzt, worin $R^1$ und $R^2$ gleich oder verschieden sein können und - gegebenenfalls eine weitere Epoxidgruppe enthaltende - Alkyl-, Cycloalkyl-, Aryl-, Aryloxi-, Alkyloxi-, Carboxialkylgruppen, $C_3$- bis $C_{20}$-alkylsubstituierte Amine bedeuten oder worin $R^1$ = Wasserstoff und $R^2$ = eine der oben angegebene Gruppen oder wobei $R^1$ und $R^2$ Teile eines Cycloalkylrings sind. Die Epoxide können nach bekannten Methoden aus den Olefinen durch Epoxidierung der Doppelbindung mit organischen Persäuren, anorganischen Persäuren, alkalischem Wasserstoffperoxid, Sauerstoff, Ozon oder Permanganat, wie von H. Batzer und E. Nikles in Chmia 16, (1962), Seiten 57 bis 92 hergestellt werden.

Die Umsetzung kann sowohl basen- als auch säurenkatalysiert ablaufen und führt dabei zu unterschiedlichen Endprodukten. Bevorzugt ist die basenkatalysierte Verkappung. Hierzu wird zu der organischen Polyphenylenetherlösung die Base hinzugegeben und das Epoxid (I) unter starkem Rühren zugesetzt. Als Basen werden bevorzugt Trialkylamine und Triphenylphosphin verwendet. Die Verkappung kann jedoch auch mit Säuren katalysiert werden. Als besonders günstig haben sich hierbei Schwefelsäure, Essigsäure und Perchlorsäure erwiesen, die ebenfalls in verschiedener Form eingesetzt werden können. Nicht katalysierte Verkappungsreaktionen sind ebenfalls möglich, führen jedoch zu einer unvollständigen Umsetzung und werden deshalb nicht bevorzugt.

Die Epoxide werden in 1,1- bis 30-fachem Überschuß, bezogen auf die in der Polyphenylenetherkette enthaltenen Hydroxylgruppen, angewendet. Besonders bevorzugt werden die Epoxide in 1,2- bis 20-fachem Überschuß zugesetzt. Das überschüssige Epoxid wird anschließend entweder mit Alkoholen unter Fällen des Polyphenylenethers ausgewaschen oder durch Destillation entfernt.

Die Umsetzung der Epoxide mit den Polyphenylenethern wird bei Temperaturen von 20 bis 250 °C, vorzugsweise bei 25 bis 150 °C vorgenommen. Die Reaktionszeiten der Verkappung liegen zwischen 5 Minuten und 2 Stunden, vorzugsweise zwischen 10 und 40 Minuten.

Als Epoxide werden bevorzugt Benzoesäureglycidylester, N-Glycidyl-N-methylanilin, Phenylglycidylether, Bisphenol-A-diglycidylether. Cyclohexylepoxid oder Butan-1,4-diglycidylether eingesetzt.

Beim Einsatz des Phenylglyicdylethers wird die Verkappung unter Basenkatalyse am günstigsten bei hohen Temperaturen, d.h. im Temperaturbereich von 100 bis 250° C vorgenommen.

Nach der Verkappung der Polyphenylenether durch Epoxide der Formel (1) in Lösung kann der Polyphenylenether aus der Lösung nach den in den eingangs erwähnten US-Patentschriften beschriebenen Verfahren isoliert werden. Die Isolierung des Polyphenylenethers ist für die vorliegende Erfindung nicht kritisch. So kann z.B. der Polyphenylenether durch Ausfällen aus einer Reaktionslösung mittels einem Antilösungsmittel, wie beispielsweise einem Überschuß von einem Alkohol, d.h. Methanol, isoliert werden. Das filtrierte Produkt kann in Alkohol aufgeschlämmt und - falls gewünscht - mit einem Entfärbungsmittel gerührt werden, dann wird der Polyphenylenether abfiltriert und nach herkömmlichen Verfahren in Filme, Fasern, ausgeformte Gegenstände u. dgl. umgewandelt. Andere Alkohole wie Isopropanol, Propanol oder Ethanol sind in gleicher Weise verwendbar.

Ein bevorzugter Aspekt des vorliegenden Verfahrens ist die Herstellung von thermostabilen Polyphenylenetherlösungen, aus denen die polymeren Stoffe nach sog. Totalisolationsverfahren, z.B. durch Sprühtrocknung, Dampfausfällung und Heißwasserzerkrümelung, gewonnen werden können. Dies erleichtert die wirtschaftliche Anwendung solcher Verfahren, die hinsichtlich der erforderlichen Energie, der Lösungsmittelverluste u. dgl. wirtschaftlicher sind als die bekannten Ausfällungsverfahren.

Die mit der Erfindung erzielten Vorteile bestehen darin, daß mit Hilfe der Epoxide eine vollständige Verkappung der in den Polyphenylenetherketten enthaltenen Hydroxylgruppen stattfindet. IR-spektroskopisch können bei der katalysierten Umsetzung keine phenolischen OH-Funktionen mehr nachgewiesen werden, die aliphatischen Hydroxylgruppen (bei 3450 bis 3550 $cm^{-1}$) sind jedoch vorhanden, da bei der Umsetzung 2-Hydroxypropylengruppen entstehen. Die Umsetzung kann auch anhand der NMR-Spektren überprüft werden. Gegenüber der Hochtemperaturverkappung besitzen die resultierenden Polyphenylenether den Vorteil, daß sie praktisch farblos sind. Das Resultat der vollständigen Verkappung der Polyphenylenether ist eine erhöhte Stabilität gegenüber thermischen und/oder oxidativen Einflüssen.

Mit der erfindungsgemäßen basenkatalysierten Epoxid-Verkappung gelingt es außerdem Polyphenylenether mit $\beta$-Hydroxypropylenphenoxy-Endgruppierungen zu erhalten, die für weitere Umsetzungen zugänglich sind.

Die angegebenen Teile in den folgenden Beispielen sind Gewichtsteile, es sei denn, es ist anders angegeben.

Die Intrinsikviskosität wird durch Messung an 0,5 %igen Lösungen in Chloroform bei 30° C bestimmt.

Die Bestimmung der OH-Funktionalität erfolgte IR-spektroskopisch durch Aufnahme an verdünnten, ca. 1 bis 5 %iger Schwefelkohlenstofflösungen in 2 mm dicken Cuvetten mit einem FIR-Spektrometer 15° C von Digilab. Inc.

Die Eigenfarbe der Polyphenylenether wurde visuell beurteilt:
1 ≙ weiß 2 ≙ gelb 3 ≙ braun.

Beispiel 1

Herstellung von Poly-(2,5-dimethyl-1,4-phenylenether)

Eine Vorlage von 1,3 g Cu-I-Bromid und 20 g 1,4-Dimethylpentylamin und 2 g 2,6-Dimethylphenol (= DMP) wird bei 20° C 5 Minuten unter Einleiten von Sauerstoff gerührt, und dann wird im Verlauf von 30 Minuten eine Lösung von 204 g DMP in 1400 ml Toluol eindosiert. Anschließend wird noch 1 Stunde bei 20° C gerührt. Die Reaktion wird in Gegenwart von 30 Liter Sauerstoff pro Stunde durchgeführt.

Reinigung der Reaktionslösung

Nach Beendigung der Reaktion wird die Polymerlösung mit 560 ml einer 10 %igen wäßrigen Lösung eines Copolymerisats bestehend aus 72 Teilen Acrylsäure und 28 Teilen Maleinsäureanhydrid, einem K-Wert von 30, gemessen in einprozentigen Lösungen in Dimethylformamid entsprechend DIN 53 726, versetzt und während 10 Minuten heftig bei 60° C gerührt. Anschließend wird die organische und die wäßrige Phase nach einer vollständigen Phasentrennung getrennt und die organische Phase durch zweimaliges Waschen mit 100 ml Salzsäure von Amin befreit.

Stabilisierung der Reaktionslösung

Die toluolische Polyphenyletherlösung wird mit 30 ml einer 10 %igen Natriumdithionitlösung während 5 Minuten heftig bei 50° C gerührt und anschließend die wäßrige Phase abgetrennt. Der Polyphenylenether hat die in Tabelle 1 angegebene Grenzviskosität und OH-Funktionalität.

Verkappung des Polyphenylenethers

Die toluolische Polyphenylenetherlösung wird mit 1 ml Tributylamin unter heftigem Rühren bei Raumtemperatur versetzt und anschließend 5,2 g Phenylglycidylether hinzugegeben. Nach 15 Minuten wurde die wäßrige Phase abgetrennt und der Polyphenylenether aus der toluolischen Lösung durch Zugabe von Methanol gefällt und getrocknet. Der Polyphenylenether hat die in Tabelle 1 angegebenen Eigenschaften.

Beispiel 2

Die Herstellung des Polyphenylenethers erfolgte wie in Beispiel 1 beschrieben. Zur Katalysatorabtrennung und Stabilisierung der Polyphenylenetherlösung wurde wie in Beispiel 1 der DT-A-27 54 887 verfahren. Die toluolische Polyphenylenetherlösung wurde hierzu mit 15,5 g einer 28 %igen wäßrigen Lösung des Trinatriumsalzes der Ethylendiamintetraessigsäure 10 Minuten mit 10 l Schwefeldioxid begast und dabei 10 Minuten heftig gerührt. Die organische und wäßrige Phase wurden nach der vollständigen Phasentrennung getrennt.

Verkappung des Polyphenylenethers

Die toluolische Polyphenylenetherlösung wird mit 15 ml 5 %iger Natronlauge unter heftigem Rühren vermischt und bei 50° C anschließend 5 g Benzoesäureglycidylester hinzugegeben. Nach 20 Minuten wurde die organische Phase abgetrennt und das Polymere durch Zugabe von Methanol gefällt und anschließend getrocknet. Eigenschaften des Polyphenylenethers siehe Tabelle 1.

Beispiel 3

Die Herstellung des Polyphenylenethers sowie die Katalysatorabtrennung und Reduktion wurden wie in Beispiel 2 beschrieben vorgenommen. Zur Verkappung des Polyphenylenethers wurde die toluolische Polyphenylenetherlösung mit 2 ml Schwefelsäure versetzt und 8 g PHenylglycidylether hinzugegeben. Nach 60 Minuten wurde der restliche Phenylglycidylether durch Destillation entfernt und das Polymere durch Methanolfällung isoliert und getrocknet. Eigenschaften des Polyphenylenethers siehe Tabelle 1.

Beispiel 4

Die Herstellung des Polyphenylenethers sowie die Katalysatorabtrennung und Reduktion wurden wie in Beispiel 2 beschrieben durchgeführt. Die Verkappung wurde ebenfalls wie im Beispiel 2 vorgenommen mit dem Unterschied, daß Bisphenol-A-diglycidylether als bifunktioneller Epoxid eingesetzt wurde. Die Eigenschaften des Polyphenylenethers sind in Tabelle 1 aufgeführt.

Vergleichsbeispiel A

Die Herstellung des Polyphenylenethers sowie die Katalysatorabtrennung und Reduktion erfolgten wie in Beispiel 2 beschrieben. Zur Verkappung der Polyphenylenetherlösung wurde wie in der US-A-3 402 143 (1) verfahren. Die Polyphenylenetherlösung wurde hierzu mit einer Lösung, die aus 15 g Lithium, 140 g Benzophenon in 1500 ml Tetrahydrofuran erzeugt wurde, bei Raumtemperatur unter heftigem Rühren umgesetzt und anschließend wurden 60 ml Acetanhydrid zur Verkappung hinzugegeben. Das Polymere wurde wie im Beispiel 2 beschrieben aufgearbeitet. Die Eigenschaften des Polymeren sind in Tabelle 1 durchgeführt.

Vergleichsbeispiel B

Die Herstellung des Polyphenylenethers sowie die Katalysatorabtrennung und Reduktion erfolgten wie in Beispiel 2 beschrieben. Die Verkappung wurde wie in der US-A-4 048 143 (3) beschrieben vorgenommen. Hierzu wurde die toluolische Polyphenylenetherlösung bei Raumtemperatur mit 30 g Acetanhydrid, 40 g einer 75 %igen Lösung von Tricaprylmonomethylammoniumchlorid in Isopropanol und 3 g NaOH

während 15 Minuten unter heftigem Rühren umgesetzt. Die Aufarbeitung erfolgte wie in Beispiel 2. Eigenschaften des Polyphenylenethers siehe Tabelle 1.

Tabelle 1

| Beispiel | Grenzviskosität (dl/g) vor¹ | Grenzviskosität (dl/g) nach¹ | OH-Gruppen (%) Phenolisches OH vor¹ | OH-Gruppen (%) Phenolisches OH nach¹ | OH-Gruppen (%) $CH_2OH$ vor¹ | OH-Gruppen (%) $CH_2OH$ nach¹ | Eigenfarbe |
|---|---|---|---|---|---|---|---|
| 1 | 0,78 | 0,80 | 0,06 | 0 | 0,00/ | 0,05 | 1 |
| 2 | 0,76 | 0,76 | 0,05 | 0 | 0,001 | 0,06 | 1 |
| 3 | 0,76 | 0,76 | 0,08 | 0 | 0,00/ | 0,08 | 1 |
| 4 | 0,78 | 0,94 | 0,08 | 0 | 0,001 | 0,07 | 1 |
| Vergleichsbeispiel (nicht erfindungsgemäß) | | | | | | | |
| A | 0,76 | 0,72 | 0,08 | 0,03 | 0,001 | 0,001 | 1-2 |
| B | 0,79 | 0,70 | 0,07 | 0,02 | 0,004 | 0,003 | 2 |

¹ Verkappung

## Patentansprüche

1. Verfahren zur Herstellung hochmolekularer Poly(phenylenether) aus einwertigen Phenolen, die in den beiden ortho-Stellungen und gegebenenfalls in meta-Position, nicht aber in der para-Stellung Akylsubstituenten aufweisen, durch oxidative Kupplungsreaktion mit Sauerstoff bei Temperaturen zwischen 10 und 50 °C in Anwesenheit eines Katalysatorkomplexes aus einem Kupfersalz und einem organischen

Amin in Gegenwart eines Lösungsmittels im Bereich von 1:1 bis 20:1 Gewichtsteilen, bezogen auf das monomere Phenol, und gegebenenfalls eines Aktivators und anschließendes Abstoppen der Reaktion und Entfernen der Katalysatorkomponente durch Zugabe ausreichender Mengen chelat- und/oder salzbildender Mittel, und Stabilisierung der Poly(phenylenether) durch chemische Umsetzung an den Hydroxylgruppen, dadurch gekennzeichnet, daß die erhaltenen Polyphenylenether mit Epoxiden der allgemeinen Formel (I):

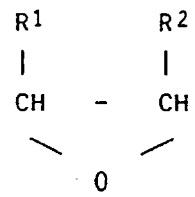

in der katalysatorfreien Reaktionslösung umgesetzt werden, worin $R^1$ und $R^2$ gleich oder verschieden sein können und - gegebenenfalls eine weitere Epoxidgruppe enthaltende - Alkyl-, Cycloalkyl-, Aryl-, Aryloxi-, Carboxialkylgruppen, $C_3$-bis $C_{20}$-alkylsubstituierte Amine bedeuten oder worin $R^1$ = Wasserstoff und $R^2$ = eine der oben angegebene Gruppen oder worin $R^1$ und $R^2$ Teile eines Cycloalkylrings sind, wobei die Umsetzung mit einem 1,1 bis 30-fachem Epoxidüberschuß, bezogen auf die Hydroxylgruppen des Poly(phenylenethers), bei Temperaturen von 20 bis 250 °C erfolgt.

2. Verfahren nach Anspruch 1, dadurch gekennzeichnet, daß in den Epoxiden (I) $R^1$ = Phenoxy oder Di-n-butylamin und $R^2$ = H sind.

3. Verfahren zur Herstellung hochmolekularer Poly(phenylenether) gemäß Anspruch 1, dadurch gekennzeichnet, daß die Umsetzung mit N-Glycidyl-N-methylanilin, Benzoesäureglycidylester, Phenylglycidylether, Cyclohexylepoxid, Bisphenol-A-diglycidylether oder Butan-1,4-diglycidylether vorgenommen wird.

4. Verfahren zur Herstellung hochmolekularer Poly(phenylenether) gemäß Anspruch 1, dadurch gekennzeichnet, daß die Umsetzung im alkalischen Medium vorgenommen wird.

5. Verfahren zur Herstellung hochmolekularer Poly(phenylenether) gemäß Anspruch 1, dadurch gekennzeichnet, daß die Umsetzung im sauren Medium vorgenommen wird.

6. Verfahren zur Herstellung hochmolekularer Poly(phenylenether) gemäß Anspruch 1, dadurch gekennzeichnet, daß die Umsetzung in Anwesenheit von Tributylamin oder Triphenylphosphin vorgenommen wird.

## Claims

1. A process for the preparation of a high molecular weight poly(phenylene ether) from a monohydric phenol, which possesses alkyl substituents in the two ortho-positions but not in the para-position and may possess alkyl substituents in the meta-position, by an oxidative coupling reaction with oxygen at from 10 to 50°C in the presence of a catalyst complex of a copper salt and an organic amine, in the presence of from 1 to 20 parts by weight of a solvent per part by weight of the monomeric phenol, and in the presence or absence of an activator, and subsequent termination of the reaction and removal of the catalyst component by the addition of sufficient amounts of chelating and/or salt-forming agents and stabilization of the poly (phenylene ether) by chemical conversion of the hydroxyl groups, wherein the polyphenylene ether obtained is reacted in the catalyst-free reaction solution with an epoxide of the formula (I)

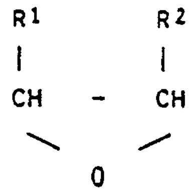

where $R^1$ and $R^2$ can be identical or different and are each alkyl, cycloalkyl, aryl, aryloxy or carboxyalkyl, each of which may contain a further epoxide group, or $C_3$-$C_{20}$-alkyl-substituted amino, or $R^1$ is hydrogen and $R^2$ is one of the above groups, or $R^1$ and $R^2$ form part of a cycloalkyl ring, the reaction being carried out with a 1.1 to 30-fold excess of epoxide based on the hydroxyl groups of the poly(phenylene ether) at from 20 to 250°C.

**2.** A process as claimed in claim 1, wherein, in the epoxide (I), $R^1$ is phenoxy or di-n-butylamino and $R^2$ is H.

**3.** A process for the preparation of a high molecular weight poly(phenylene ether) as claimed in claim 1, wherein the reaction is carried out using N-glycidyl-N-methylaniline, glycidyl benzoate, phenyl glycidyl ether, cyclohexyl epoxide, bisphenol A diglycidyl ether or butane-1,4-diglycidyl ether.

**4.** A process for the preparation of a high molecular weight poly(phenylene ether) as claimed in claim 1, wherein the conversion is carried out in an alkaline medium.

**5.** A process for the preparation of a high molecular weight poly(phenylene ether) as claimed in claim 1, wherein the conversion is carried out in an acidic medium.

**6.** A process for the preparation of a high molecular weight poly(phenylene ether) as claimed in claim 1, wherein the conversion is carried out in the presence of tributylamine or triphenylphosphine.

**Revendications**

**1.** Procédé de préparation de poly(phénylène éther) de haut poids moléculaire à partir de phénols monovalents, qui présentent dans les deux positions ortho et éventuellement en position méta, mais pas en position para, des substituants alkyle, par réaction de couplage par oxydation avec de l'oxygène, à des températures comprises entre 10 et 50 °C, en présence d'un complexe catalytique constitué d'un sel de cuivre et d'une amine organique en présence d'un solvant dans la proportion de 1:1 à 20:1 parties en poids par rapport au phénol monomère, et éventuellement en présence d'un activateur, après quoi la réaction est arrêtée et les composants du catalyseur sont éliminés par addition de quantités suffisantes d'agents chélateurs et/ou d'agents engendrant la formation de sels, et les poly-(phénylène éther) sont stabilisés par réaction chimique sur les groupes hydroxyle, caractérisé en ce que l'on fait réagir les poly(phénylène éther) obtenus, dans la solution réactionnelle exempte de catalyseur, avec des époxydes de la formule générale (I):

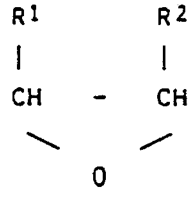

(I)

dans laquelle $R^1$ et $R^2$ peuvent être identiques ou différents et représentent des groupes - contenant éventuellement un groupe époxyde supplémentaire - alkyle, cycloalkyle, aryle, aryloxy, carboxyalkyle, des amines substituées par des restes $C_3$ - $C_{20}$-alkyle, ou dans laquelle $R^1$ = hydrogène et $R^2$ = l'un des groupes sus-indiqués, ou dans laquelle $R^1$ et $R^2$ font partie d'un cycle cycloalkyle, la réaction ayant lieu à des températures de 20 à 250 °C, avec un excès d'époxyde de 1,1 à 30 fois par rapport aux

groupes hydroxyle du poly(phénylène éther).

2. Procédé suivant la revendication 1, caractérisé en ce que, dans les époxydes (I), $R^1$ = phénoxy ou di-n-butylamine et $R^2$ = H.

3. Procédé pour la préparation de poly(phénylène éther) de haut poids moléculaire suivant la revendication 1, caractérisé en ce que la réaction est effectuée avec la N-glycidyl-N-méthylaniline, le benzoate de glycidyle, le phénylglycidyléther, le cyclohexylépoxyde, le diglycidyléther de bisphénol A ou le butane-1,4-diglycidyléther.

4. Procédé de préparation de poly(phénylène éther) de haut poids moléculaire suivant la revendication 1, caractérisé en ce que la réaction est effectuée en milieu alcalin.

5. Procédé de préparation de poly(phénylène éther) de haut poids moléculaire suivant la revendication 1, caractérisé en ce que la réaction est effectuée en milieu acide.

6. Procédé de préparation de poly(phénylène éther) de haut poids moléculaire suivant la revendication 1, caractérisé en ce que la réaction est effectuée en présence de tributylamine ou de triphénylphosphine.